# FASCICULE DE BREVET EUROPEEN

(11) **EP 3 359 779 B1**
(45) Date de publication et mention de la délivrance du brevet: **25.11.2020**
(21) Numéro de dépôt: 16787501.2
(22) Date de dépôt: 04.10.2016
(51) Int. Cl.: F01D 11/00, F01D 25/24, F01D 9/04

(54) **ENSEMBLE D'ANNEAU DE TURBINE AVEC MAINTIEN AXIAL**
TURBINENRINGANORDNUNG MIT AXIALER HALTERUNG
TURBINE RING ASSEMBLY WITH AXIAL RETENTION

(30) Priorité: 05.10.2015 FR 1559457
(43) Date de publication de la demande: 15.08.2018
(73) Titulaire: Safran Aircraft Engines, 75015 Paris (FR)
(72) Inventeur: QUENNEHEN, Lucien, Henri, Jacques, 77550 Moissy-Cramayel Cedex (FR); CONGRATEL, Sébastien, Serge, Francis, 77550 Moissy-Cramayel Cedex (FR); DUFFAU, Clément, Jean, Pierre, 77550 Moissy-Cramayel Cedex (FR); SIMON, Matthieu, 77550 Moissy-Cramayel Cedex (FR)
(74) Mandataire: Cabinet Beau de Loménie
(86) Numéro de dépôt international: PCT/FR2016/052538
(87) Numéro de publication internationale: WO 2017/060604

(56) Documents cités:
- GB-A- 2 481 481
- JP-A- H11 343 809
- JP-A- 2009 203 948
- US-A1- 2004 062 640
- US-A1- 2006 292 001

## Description

### Arrière-plan de l'invention

L'invention concerne un ensemble d'anneau de turbine pour une turbomachine, lequel ensemble comprend une pluralité de secteurs d'anneau en une seule pièce en matériau composite à matrice céramique ou en matériau métallique et une structure de support d'anneau.

Le domaine d'application de l'invention est notamment celui des moteurs aéronautiques à turbine à gaz. L'invention est toutefois applicable à d'autres turbomachines, par exemple des turbines industrielles.

Les matériaux composites à matrice céramique, ou CMC, sont connus pour leurs bonnes propriétés mécaniques qui les rendent aptes à constituer des éléments de structure, et pour leur capacité à conserver ces propriétés à des températures élevées.

Dans des moteurs aéronautiques à turbine à gaz, l'amélioration du rendement et la réduction des émissions polluantes conduisent à rechercher un fonctionnement à des températures toujours plus élevées. Dans le cas d'ensembles d'anneau de turbine entièrement métalliques, il est nécessaire de refroidir tous les éléments de l'ensemble et en particulier l'anneau de turbine qui est soumis à des flux hautes températures. Ce refroidissement a un impact significatif sur la performance du moteur puisque le flux de refroidissement utilisé est prélevé sur le flux principal du moteur. En outre, l'utilisation de métal pour l'anneau de turbine limite les possibilités d'augmenter la température au niveau de la turbine, ce qui permettrait pourtant d'améliorer les performances des moteurs aéronautiques.

L'utilisation de CMC pour différentes parties chaudes de tels moteurs a déjà été envisagée, d'autant que les CMC ont une masse volumique inférieure à celle de métaux réfractaires traditionnellement utilisés.

Ainsi, la réalisation de secteurs d'anneau de turbine en une seule pièce en CMC est notamment décrite dans le document US 2012/0027572. Les secteurs d'anneau comportent une base annulaire dont la face interne définit la face interne de l'anneau de turbine et une face externe à partir de laquelle s'étendent deux parties formant pattes dont les extrémités sont engagées dans des logements d'une structure métallique de support d'anneau. Le document GB 2 481 481 décrit un ensemble d'anneau de turbine comprenant une pluralité de secteurs d'anneau formant un anneau de turbine.

L'utilisation de secteurs d'anneau en CMC permet de réduire significativement la ventilation nécessaire au refroidissement de l'anneau de turbine. Toutefois, l'étanchéité entre la veine d'écoulement gazeux du côté intérieur des secteurs d'anneau et le côté extérieur des secteurs d'anneau demeure un problème, et ce plus particulièrement lorsque les secteurs d'anneau présente une forme de Pi (π) inversé. En effet, ce type de secteur d'anneau ne comporte pas de baignoire, ce qui ne permet pas d'installer une double étanchéité horizontale au niveau ou au-dessus des appuis entre les secteurs d'anneau et la structure de support de ces secteurs.

Cette problématique d'étanchéité se pose également pour des secteurs d'anneau métalliques qui ne comportent pas de baignoire mais dont la fabrication en est grandement simplifiée de ce fait.

### Objet et résumé de l'invention

L'invention vise à éviter de tels inconvénients et propose à cet effet un ensemble d'anneau de turbine comprenant une pluralité de secteurs d'anneau en matériau composite à matrice céramique ou en matériau métallique formant un anneau de turbine et une structure de support d'anneau comportant une bride annulaire amont et une bride annulaire aval, chaque secteur d'anneau ayant une première partie formant base annulaire avec une face interne définissant la face interne de l'anneau de turbine et une face externe à partir de laquelle s'étendent radialement une patte amont et une patte aval, les pattes amont et aval de chaque secteur d'anneau étant maintenues entre les deux brides annulaires amont et aval de la structure de support d'anneau, chaque secteur d'anneau comprenant une première languette d'étanchéité horizontale s'étendant le long de la base annulaire, la première languette d'étanchéité horizontale étant logée dans une première rainure horizontale présente dans la base annulaire, une languette d'étanchéité verticale amont s'étendant le long de la patte amont, la languette d'étanchéité verticale amont étant logée dans une rainure verticale présente dans la patte amont et une première languette d'étanchéité verticale aval s'étendant le long de la patte aval, la première languette d'étanchéité verticale aval étant logée dans une première rainure verticale présente dans la patte aval, caractérisé en ce que chaque secteur d'anneau comprend en outre une deuxième languette d'étanchéité horizontale s'étendant sur une partie de la base annulaire au-dessus de la première languette d'étanchéité horizontale, la deuxième languette d'étanchéité horizontale étant logée dans une deuxième rainure horizontale présente dans la base annulaire, et en ce qu'un premier élément d'étanchéité coudé est logé à la fois dans la rainure verticale présente dans la patte amont et dans la deuxième rainure horizontale tandis qu'un deuxième élément d'étanchéité coudé est logé à la fois dans la première rainure horizontale et dans la première rainure verticale présente dans la patte aval, la première rainure verticale débouchant dans la première rainure horizontale, ou tandis qu'un deuxième élément d'étanchéité coudé est logé à la fois dans la deuxième rainure horizontale et dans la première rainure verticale présente dans la patte aval, la première rainure verticale débouchant dans la deuxième rainure horizontale.

Avec deux languettes d'étanchéité horizontales superposées dans la direction radiale, on réalise une double étanchéité au niveau de la base de l'anneau qui renforce l'étanchéité inter-secteur dans l'anneau en mettant ainsi en série les sections de fuite, et ce tout en assurant une redirection de l'air circulant du côté externe de l'anneau vers l'amont, c'est-à-dire dans la roue mobile formées par les pales rotatives à l'intérieur de l'anneau. Par ailleurs, l'utilisation d'éléments d'étanchéité coudés permettent de boucher les fuites qui peuvent se produire au niveau des portions de contact entre les languettes d'étanchéité, c'est-à-dire au niveau des jonctions orthogonales des rainures. Dans l'exemple décrit ici, le premier élément d'étanchéité coudé empêche les fuites au niveau de la portion de contact entre la première languette horizontale et la languette verticale amont tandis que le deuxième élément d'étanchéité coudé empêche les fuites au niveau de la portion de contact entre la première ou deuxième languette horizontale et la languette verticale aval.

Conformément à un mode de réalisation de l'ensemble d'anneau de turbine de l'invention, chaque secteur d'anneau comprend en outre une deuxième languette d'étanchéité verticale aval s'étendant le long de la patte aval, la deuxième languette d'étanchéité verticale aval étant logée dans une deuxième rainure verticale présente dans la patte aval, la deuxième languette d'étanchéité verticale aval étant en contact à l'une de ses extrémités avec la deuxième languette d'étanchéité horizontale, la deuxième rainure verticale présente dans la patte aval débouchant dans la deuxième rainure horizontale, le deuxième élément d'étanchéité coudé étant logé à la fois dans la deuxième rainure horizontale et dans la deuxième rainure verticale présente dans la patte aval.

En ajoutant une deuxième languette d'étanchéité verticale en aval, on améliore encore l'efficacité de l'étanchéité, une première perte de charge étant réalisée par l'une des deux languettes verticales aval avant l'autre languette d'étanchéité verticale aval. Le renforcement de l'étanchéité en aval par l'utilisation de deux languettes verticales est avantageux car la différence de pression entre la cavité de l'anneau et la portion de veine en aval est élevée, ce qui augmente la force d'aspiration de l'air entre ces deux volumes et, par conséquent, le risque de fuites.

Selon une caractéristique particulière de l'ensemble d'anneau de turbine de l'invention, un troisième élément d'étanchéité coudé est logé à la fois dans la première rainure horizontale et dans la première rainure verticale présente dans la patte aval. On réduit encore les fuites au niveau des portions de contact entre les languettes d'étanchéité en aval dans l'anneau.

Conformément à un autre mode de réalisation de l'ensemble d'anneau de turbine de l'invention, chaque secteur d'anneau comprend en outre une deuxième languette d'étanchéité verticale aval s'étendant le long de la patte aval, la deuxième languette d'étanchéité verticale aval étant logée dans une deuxième rainure verticale présente dans la patte aval, la deuxième languette d'étanchéité verticale aval étant en contact avec la deuxième languette d'étanchéité horizontale, la deuxième rainure verticale présente dans la patte aval débouchant dans les première et deuxième rainures horizontales, le deuxième élément d'étanchéité coudé étant logé à la fois dans la première rainure horizontale et dans la première rainure verticale présente dans la patte aval.

En ajoutant une deuxième languette d'étanchéité verticale en aval, on améliore encore l'efficacité de l'étanchéité, une première perte de charge étant réalisée par l'une des deux languettes verticales aval avant l'autre languette d'étanchéité verticale aval.

Conformément à un autre mode de réalisation de l'ensemble d'anneau de turbine de l'invention, la bride annulaire amont comporte une lèvre en contact avec la patte amont de chaque secteur d'anneau tandis que la bride annulaire aval comporte une lèvre en contact avec la patte aval de chaque secteur d'anneau, la rainure verticale présente dans la patte amont de chaque secteur d'anneau s'étendant dans une direction oblique par rapport à l'axe de la patte amont, ladite rainure verticale débouchant sur la face externe de la patte amont au niveau de la lèvre de la bride annulaire amont tandis que la rainure verticale présente dans la patte aval de chaque secteur d'anneau s'étend dans une direction oblique par rapport à l'axe de la patte aval, ladite rainure verticale débouchant sur la face externe de la patte aval au niveau de la lèvre de la bride annulaire aval.

Avec des rainures verticales amont et aval s'étendant obliquement dans les pattes de chaque secteur d'anneau de manière à déboucher au niveau des portions d'appui avec les brides annulaires de la structure de support d'anneau, on réduit les fuites inter-secteurs au niveau de ces portions d'appui.

Selon une caractéristique particulière de l'ensemble d'anneau de turbine de l'invention, les deux brides annulaires de la structure de support d'anneau exercent une contrainte sur les pattes des secteurs d'anneau et en ce qu'au moins une des brides de la structure de support d'anneau est élastiquement déformable dans la direction axiale de l'anneau.

Grâce à la présence d'au moins une bride élastiquement déformable, le contact entre les brides de la structure de support d'anneau et les pattes des secteurs d'anneau peut être maintenu indépendamment des variations de température.

Selon une autre caractéristique particulière de l'ensemble d'anneau de turbine de l'invention, celui-ci comprend en outre une pluralité de pions engagés à la fois dans au moins une des brides annulaires de la structure de support d'anneau et les pattes des secteurs d'anneau en regard de ladite au moins bride annulaire. Les pions permettent de bloquer la rotation éventuelle des secteurs d'anneau dans la structure de support d'anneau et de les maintenir radialement dans ladite structure.

### Brève description des dessins.

L'invention sera mieux comprise à la lecture faite ci-après, à titre indicatif mais non limitatif, en référence aux dessins annexés sur lesquels :
- la figure 1 est une vue en demi-coupe radiale montrant un mode de réalisation d'un ensemble d'anneau de turbine selon l'invention ;
- les figures 2A et 2B sont des vues schématiques partielles en perspective montrant le positionnement de languettes d'étanchéité dans un secteur d'anneau de l'ensemble d'anneau de turbine de la figure 1 ;
- les figures 3 à 6 sont des vues en demi-coupe radiale montrant chacune un autre mode de réalisation d'un ensemble d'anneau de turbine selon l'invention.

### Description détaillée de modes de réalisation

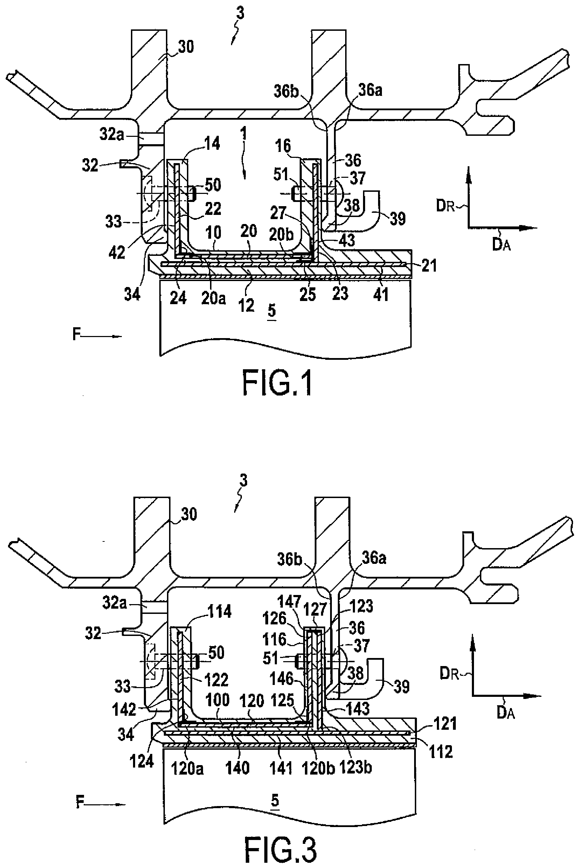

La figure 1 montre un ensemble d'anneau de turbine haute pression comprenant un anneau de turbine 1, ici en matériau composite à matrice céramique (CMC), et une structure métallique de support d'anneau 3. L'anneau de turbine 1 entoure un ensemble de pales rotatives 5. L'anneau de turbine 1 est formé d'une pluralité de secteurs d'anneau 10, la figure 1 étant une vue en coupe radiale selon un plan passant entre deux secteurs d'anneaux contigus. La flèche D_{A} indique la direction axiale par rapport à l'anneau de turbine 1 tandis que la flèche D_{R} indique la direction radiale par rapport à l'anneau de turbine 1.

Chaque secteur d'anneau 10 a une section sensiblement en forme de Pi (π) inversé avec une base annulaire 12 dont la face interne revêtue d'une couche 13 de matériau abradable et/ou d'une barrière thermique définit la veine d'écoulement de flux gazeux dans la turbine. Des pattes amont et aval 14, 16 s'étendent à partir de la face externe de la base annulaire 12 dans la direction radiale D_{R}. Les termes "amont" et "aval" sont utilisés ici en référence au sens d'écoulement du flux gazeux dans la turbine (flèche F).

La structure de support d'anneau 3 qui est solidaire d'un carter de turbine 30 comprend une bride radiale amont annulaire 32 comportant une lèvre 34 sur sa face en regard des pattes amont 14 des secteurs d'anneau 10, la lèvre 34 étant en appui sur la face externe 14a des pattes amont 14. Du côté aval, la structure de support d'anneau comprend une bride radiale aval annulaire 36 comportant une lèvre 38 sur sa face en regard des pattes aval 16 des secteurs d'anneau 10, la lèvre 38 tant en appui sur la face externe 16a des pattes aval 16.

Les pattes 14 et 16 de chaque secteur d'anneau 10 sont montées en précontrainte entre les brides annulaires 32 et 36 de manière à ce que les brides exercent, au moins à « froid », c'est-à-dire à une température ambiante d'environ 20°C, mais également à toutes les températures de fonctionnement de la turbine, une contrainte sur les pattes 14 et 16 et donc un serrage des secteurs par les brides. Cette contrainte est maintenue à toutes les températures auxquelles l'ensemble d'anneau peut être soumis lors du fonctionnement de la turbine et est maîtrisée, c'est-à-dire sans sur-contraindre les secteurs d'anneau, grâce à la présence d'au moins une bride élastiquement déformable comme expliqué ci-avant. En outre, de façon classique, des orifices de ventilation 32a formés dans la bride 32 permettent d'amener de l'air de refroidissement du côté extérieur de l'anneau de turbine 10. Les secteurs d'anneau 10 sont montés les uns après les autres par écartement de la bride radiale aval annulaire 36 en tirant sur celle-ci via un crochet 39 dans la direction axiale D_{A} afin d'augmenter l'écartement entre les brides 32 et 36 et permettre l'insertion des pattes 14 et 16 entre les brides 32 et 36 sans risque d'endommagement.

Par ailleurs, dans l'exemple décrit ici, les secteurs d'anneau 10 sont en outre maintenus par des pions de blocage. Plus précisément et comme illustré sur la figure 1, des pions 50 sont engagés à la fois dans la bride radiale amont annulaire 32 de la structure de support d'anneau 3 et dans les pattes amont 14 des secteurs d'anneau 10. A cet effet, les pions 50 traversent chacun respectivement un orifice 33 ménagé dans la bride radiale amont annulaire 32 et un orifice 15 ménagé dans chaque patte amont 14, les orifices 33 et 15 étant alignés lors du montage des secteurs d'anneau 10 sur la structure de support d'anneau 3. De même, des pions 51 sont engagés à la fois dans la bride radiale aval annulaire 36 de la structure de support d'anneau 3 et dans les pattes aval 16 des secteurs d'anneau 10. A cet effet, les pions 51 traversent chacun respectivement un orifice 37 ménagé dans la bride radiale aval annulaire 36 et un orifice 17 ménagé chaque patte aval 16, les orifices 37 et 17 étant alignés lors du montage des secteurs d'anneau 10 sur la structure de support d'anneau 3.

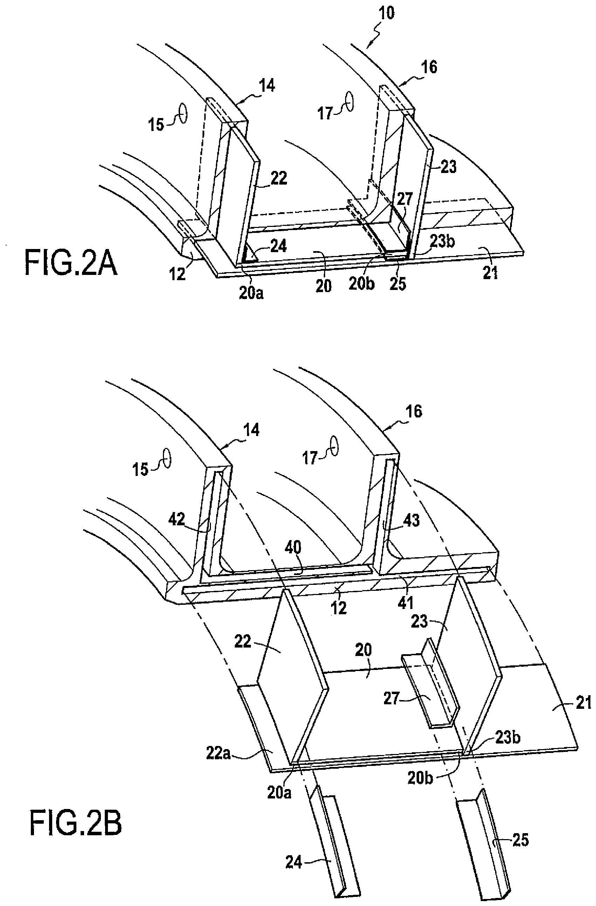

Conformément à l'invention, l'étanchéité de l'anneau est assurée par des languettes d'étanchéité et des joints coudés. Plus précisément, comme représenté sur les figures 1, 2A et 2B, chaque secteur d'anneau 10 est muni d'une première languette d'étanchéité horizontale 21 qui s'étend sur presque toute la longueur de la base annulaire 12 comprise entre les pattes amont et aval 14 et 16, d'une deuxième languette d'étanchéité horizontale 20 disposée au-dessus de la première languette horizontale et qui s'étend sur une partie de la longueur de la base annulaire 12, d'une languette d'étanchéité verticale amont 22 qui s'étend le long de la patte amont 14 et d'une languette d'étanchéité verticale aval 23 qui s'étend le long de la patte aval 16.

Chaque languette d'étanchéité est logée dans des rainures se faisant face dans les bords en regard de deux secteurs d'anneau voisins. A cet effet, chaque secteur d'anneau 10 comporte une première rainure horizontale 41 ménagée dans la base annulaire 12 et dans laquelle est logée la première languette d'étanchéité horizontale 21, une deuxième rainure horizontale 40 ménagée dans la base annulaire 12 au-dessus de la rainure 41 et dans laquelle est logée la deuxième languette d'étanchéité horizontale 20, une rainure verticale amont 42 ménagée dans la patte amont 14 dans laquelle est logée la languette d'étanchéité verticale amont 22 et une rainure verticale aval 43 ménagée dans la patte aval 16 dans laquelle est logée la languette d'étanchéité verticale aval 23. La deuxième rainure horizontale 40 débouche d'un côté dans la partie inférieure de la rainure verticale amont 42 et de l'autre côté dans la partie inférieure de la rainure verticale aval 43. Ainsi, la deuxième languette d'étanchéité horizontale 20 est en contact à une extrémité 20a avec la languette d'étanchéité verticale amont 22 et en contact à l'autre extrémité 20b avec la languette verticale aval 23. En outre, la rainure verticale aval 43 débouche dans la première rainure horizontale 41 de sorte que l'extrémité inférieure 23b de la languette d'étanchéité verticale aval 23 est en contact avec la première languette d'étanchéité horizontale 21. Concernant la première rainure horizontale 41, celle-ci est réalisée de préférence au plus près de la face interne du secteur d'anneau afin que la première languette d'étanchéité 21 se trouve au plus près de la veine. On réduit ainsi le jeu inter-secteur et son impact sur le sommet des aubes.

Les figures 1, 2A et 2B illustrent un seul secteur d'anneau 10 dans lequel les languettes 20, 21, 22 et 23 sont partiellement introduites respectivement dans les rainures 40, 41, 42 et 43. La partie des languettes 20, 21, 22 et 23 dépassant du secteur d'anneau 10 (figure 2B) sont introduites dans des rainures correspondantes ménagées dans le secteur d'anneau voisin (non représenté sur les figures 1, 2A et 2B).

Les languettes 20, 21, 22 et 23 sont par exemple métalliques et sont de préférence montées avec jeu à froid dans les rainures 40, 41, 42 et 43 afin d'assurer la fonction d'étanchéité aux températures rencontrées en service. A titre d'exemples non limitatifs, les languettes d'étanchéité peuvent être réalisées en alliage base cobalt tels que les alliages HA 188 ou HS 25, en matériau métallique haute performance (point de fusion élevé), en molybdène, en tungstène, ou encore en matériau composite CMC.

En outre, un premier élément d'étanchéité ou joint coudé 24 est logé à la fois dans la rainure verticale amont 42 et dans la deuxième rainure horizontale 40 tandis qu'un deuxième élément d'étanchéité ou joint coudé 25 est logé à la fois dans la première rainure horizontale 41 et dans la rainure verticale aval 43. Les joints coudés 24 et 25 peuvent être formés à partir de feuilles de métal pliées. A titre d'exemples non limitatifs, les joints coudés peuvent être réalisées en alliage base cobalt tels que les alliages HA 188 ou HS 25, en matériau métallique haute performance (point de fusion élevé), en molybdène, en tungstène, ou encore en matériau composite CMC. De manière optionnelle, un troisième élément d'étanchéité ou joint coudé peut être utilisé, ici l'élément d'étanchéité ou joint coudé 27 logé à la fois dans la deuxième rainure horizontale 40 et dans la première rainure verticale 43 contre le deuxième joint coudé 25.

De même que pour les languettes d'étanchéité 20, 21, 22 et 23, les joints coudés 24, 25 et 27 sont partiellement introduits respectivement dans les rainures 42 et 40, dans les rainures 41 et 43 et dans les rainures 40 et 43. La partie des joints coudés 24 et 25 dépassant du secteur d'anneau 10 (figure 2B) sont introduites dans des rainures correspondantes ménagées dans le secteur d'anneau voisin (non représenté sur les figures 1, 2A et 2B).

Avec deux languettes d'étanchéité horizontales superposées dans la direction radiale D_{R}, on réalise une double étanchéité au niveau de la base de l'anneau qui renforce l'étanchéité inter-secteur dans l'anneau tout en assurant une redirection de l'air circulant du côté externe de l'anneau vers l'amont, c'est-à-dire dans la roue mobile formées par les pales rotatives à l'intérieur de l'anneau. Par ailleurs, l'utilisation des joints coudés 24 et 25 permettent de boucher les fuites qui peuvent se produire au niveau des portions de contact entre les languettes d'étanchéité, c'est-à-dire au niveau des jonctions orthogonales des rainures. Dans l'exemple décrit ici, le joint coudé 24 empêche les fuites au niveau de la portion de contact entre la deuxième languette horizontale 20 et la languette verticale amont 22 tandis que le joint coudé 25 empêche les fuites au niveau de la portion de contact entre la première languette horizontale 21 et la languette verticale aval 23.

La figure 3 illustre un ensemble d'anneau de turbine haute pression selon un autre mode de réalisation de l'invention. Dans l'ensemble d'anneau de la figure 3, la structure métallique de support d'anneau est identique à la structure métallique de support d'anneau 3 décrite précédemment en relation avec les figures 1, 2A et 2B et ne sera pas décrite à nouveau par souci de simplification. L'ensemble d'anneau de la figure 3 diffère de celui décrit précédemment en relation avec les figures 1, 2A et 2B en ce qu'une deuxième languette d'étanchéité verticale aval est présente dans la patte aval de chaque secteur d'anneau.

Plus précisément, comme représenté sur la figure 3, chaque secteur d'anneau 100 est muni d'une première languette d'étanchéité horizontale 121 qui s'étend sur presque toute la longueur de la base annulaire 112 comprise entre les pattes amont et aval 114 et 116, d'une deuxième languette d'étanchéité horizontale 120 disposée au-dessus de la première languette horizontale et qui s'étend sur une partie de la longueur de la base annulaire 112, d'une languette d'étanchéité verticale amont 122 qui s'étend le long de la patte amont 114, d'une première languette d'étanchéité verticale aval 123 qui s'étend le long de la patte aval 116 et d'une deuxième languette d'étanchéité verticale aval 126 qui s'étend le long de la patte aval 116 en amont de la première languette 123.

Chaque languette d'étanchéité est logée dans des rainures se faisant face dans les bords en regard de deux secteurs d'anneau voisins. A cet effet, chaque secteur d'anneau 100 comporte une première rainure horizontale 141 ménagée dans la base annulaire 112 et dans laquelle est logée la première languette d'étanchéité horizontale 121, une deuxième rainure horizontale 140 ménagée dans la base annulaire 112 au-dessus de la rainure 141 et dans laquelle est logée la deuxième languette d'étanchéité horizontale 120, une rainure verticale amont 142 ménagée dans la patte amont 114 dans laquelle est logée la languette d'étanchéité verticale amont 122, une première rainure verticale aval 143 ménagée dans la patte aval 116 dans laquelle est logée la première languette d'étanchéité verticale aval 123 et une deuxième rainure verticale aval 146 ménagée dans la patte aval 116 dans laquelle est logée la deuxième languette d'étanchéité verticale aval 126. La deuxième rainure horizontale 140 débouche d'un côté dans la partie inférieure de la rainure verticale amont 142 et de l'autre côté dans la partie inférieure de la deuxième rainure verticale aval 146. Ainsi, la deuxième languette d'étanchéité horizontale 120 est en contact à une extrémité 120a avec la languette d'étanchéité verticale amont 122 et en contact à l'autre extrémité 120b avec la deuxième languette verticale aval 126. En outre, la première rainure verticale aval 143 débouche dans la première rainure horizontale 141 de sorte que l'extrémité inférieure 123b de la languette d'étanchéité verticale aval 123 est en contact avec la première languette d'étanchéité horizontale 121.

Une languette 127 est en outre ajouté entre les extrémités supérieures des languettes verticales 123 et 126 afin d'assurer une continuité dans l'étanchéité formée par ces deux languettes verticales. La languette 127 est logée dans une rainure horizontale 147 débouchant dans la partie supérieure des rainures verticales 143 et 146.

En outre, un premier joint coudé 124 est logé à la fois dans la rainure verticale amont 142 et dans la deuxième rainure horizontale 140 tandis qu'un deuxième joint coudé 125 est logé à la fois dans la deuxième rainure horizontale 140 et dans la deuxième rainure verticale aval 146. Les joints coudés 124 et 125 peuvent être formés à partir de feuilles de métal pliées. D'autres matériaux tels que ceux mentionnés ci-avant sont également envisageables. De manière optionnelle, un troisième élément d'étanchéité ou joint coudé (non représenté sur la figure 3) peut être logé à la fois dans la première rainure horizontale 141 et dans la première rainure verticale 143.

Avec deux languettes d'étanchéité horizontales superposées dans la direction radiale D_{R}, on réalise une double étanchéité au niveau de la base de l'anneau qui renforce l'étanchéité inter-secteur dans l'anneau tout en assurant une redirection de l'air circulant du côté externe de l'anneau vers l'amont, c'est-à-dire dans la roue mobile formées par les pales rotatives à l'intérieur de l'anneau. Par ailleurs, l'utilisation des joints coudés 124 et 125 permettent de boucher les fuites qui peuvent se produire au niveau des portions de contact entre les languettes d'étanchéité et de mettre ainsi en série les sections de fuites vers l'aval. Dans l'exemple décrit ici, le joint coudé 124 empêche les fuites au niveau de la portion de contact entre la deuxième languette horizontale 120 et la languette verticale amont 122 tandis que le joint coudé 125 empêche les fuites au niveau de la portion de contact entre la deuxième languette horizontale 120 et la languette verticale aval 126. Enfin, ajoutant une deuxième languette d'étanchéité verticale en aval, on améliore encore l'efficacité de l'étanchéité, une première perte de charge étant réalisée par la deuxième languette verticale aval 126 avant la première languette d'étanchéité verticale aval 123.

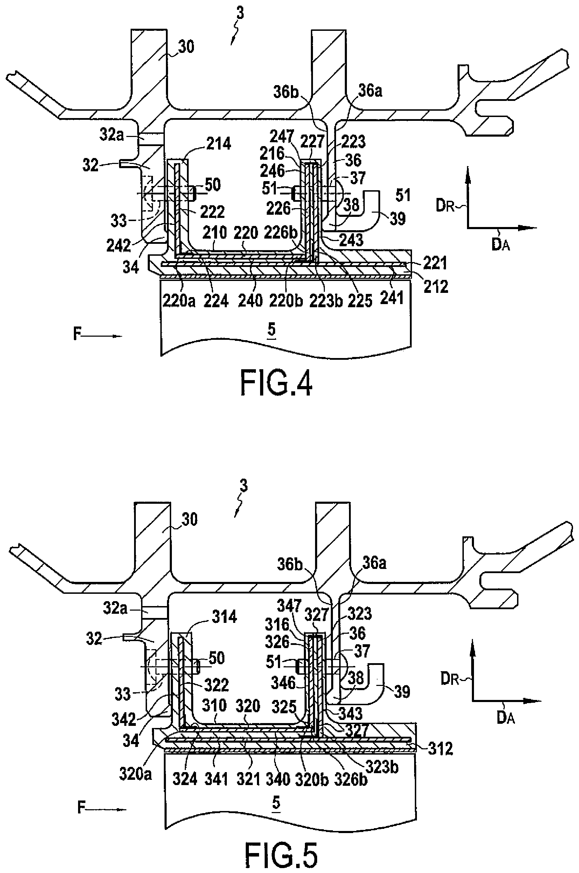

La figure 4 illustre un ensemble d'anneau de turbine haute pression selon un autre mode de réalisation de l'invention qui diffère de celui de la figure 3 en ce que le deuxième joint coudé est placé à une position différente. Dans l'ensemble d'anneau de la figure 4, la structure métallique de support d'anneau est identique à la structure métallique de support d'anneau 3 décrite précédemment en relation avec les figures 1, 2A et 2B et ne sera pas décrite à nouveau par souci de simplification.

Plus précisément, comme représenté sur la figure 4, chaque secteur d'anneau 200 comprend :
- une première languette d'étanchéité horizontale 221 logée dans une première rainure horizontale 241 qui s'étend sur presque toute la longueur de la base annulaire 212,
- une deuxième languette d'étanchéité horizontale 220 logée dans une deuxième rainure horizontale 240 qui s'étend sur une partie de la base annulaire 212,
- une languette d'étanchéité verticale amont 222 logée dans une rainure verticale amont 242 qui s'étend le long de la patte amont 214,
- une première languette d'étanchéité verticale aval 223 logée dans une première rainure verticale aval 243 qui s'étend le long de la patte aval 216, et
- une deuxième languette d'étanchéité verticale aval 226 logée dans une deuxième rainure verticale aval 246 qui s'étend le long de la patte aval 216 en amont de la première languette 223.

La deuxième rainure horizontale 240 débouche d'un côté dans la partie inférieure de la rainure verticale amont 242 et de l'autre côté dans la partie inférieure de la deuxième rainure verticale aval 246. Ainsi, la deuxième languette d'étanchéité horizontale 220 est en contact à une extrémité 220a avec la languette d'étanchéité verticale amont 222 et en contact à l'autre extrémité 220b avec la deuxième languette verticale aval 226. En outre, la première rainure verticale aval 243 débouche dans la première rainure horizontale 241 de sorte que l'extrémité inférieure 223b de la languette d'étanchéité verticale aval 223 est en regard de la première languette d'étanchéité horizontale 221. De même, la deuxième rainure verticale aval 246 débouche dans la première rainure horizontale 241 de sorte que l'extrémité inférieure 226b de la languette d'étanchéité verticale aval 226 est en regard de la première languette d'étanchéité horizontale 221.

Une languette 227 est en outre ajoutée entre les extrémités supérieures des languettes verticales 223 et 226 afin d'assurer une continuité dans l'étanchéité formée par ces deux languettes verticales. La languette 227 est logée dans une rainure horizontale 247 débouchant dans la partie supérieure des rainures verticales 243 et 246.

En outre, un premier joint coudé 224 est logé à la fois dans la rainure verticale amont 242 et dans la deuxième rainure horizontale 240 tandis qu'un deuxième joint coudé 225 est logé à la fois dans la première rainure horizontale 241 et dans la première rainure verticale aval 243. Les joints coudés 224 et 225 peuvent être formés à partir de feuilles de métal pliées. D'autres matériaux tels que ceux mentionnés ci-avant sont également envisageables. De manière optionnelle, un troisième élément d'étanchéité ou joint coudé (non représenté sur la figure 4) peut être logé à la fois dans la deuxième rainure horizontale 240 et dans la deuxième rainure verticale 246.

Avec deux languettes d'étanchéité horizontales superposées dans la direction radiale D_{R}, on réalise une double étanchéité au niveau de la base de l'anneau qui renforce l'étanchéité inter-secteur dans l'anneau tout en assurant une redirection de l'air circulant du côté externe de l'anneau vers l'amont, c'est-à-dire dans la roue mobile formées par les pales rotatives à l'intérieur de l'anneau. Par ailleurs, l'utilisation des joints coudés 224 et 225 permettent de boucher les fuites qui peuvent se produire au niveau des portions de contact entre les languettes d'étanchéité et de mettre ainsi en série les sections de fuites vers l'aval. Dans l'exemple décrit ici, le joint coudé 224 empêche les fuites au niveau de la portion de contact entre la deuxième languette horizontale 220 et la languette verticale amont 222 tandis que le joint coudé 225 empêche les fuites au niveau de la portion de contact entre la première languette horizontale 221 et la première languette verticale aval 243. Enfin, ajoutant une deuxième languette d'étanchéité verticale en aval, on améliore encore l'efficacité de l'étanchéité.

La figure 5 illustre un ensemble d'anneau de turbine haute pression selon un autre mode de réalisation de l'invention qui diffère de celui des figures 3 et 4 en ce qu'un troisième joint coudé est en outre placé en aval dans les secteurs d'anneau. Dans l'ensemble d'anneau de la figure 5, la structure métallique de support d'anneau est identique à la structure métallique de support d'anneau 3 décrite précédemment en relation avec les figures 1, 2A et 2B et ne sera pas décrite à nouveau par souci de simplification.

Plus précisément, comme représenté sur la figure 5, chaque secteur d'anneau 300 comprend :
- une première languette d'étanchéité horizontale 321 logée dans une première rainure horizontale 341 qui s'étend sur presque toute la longueur de la base annulaire 312,
- une deuxième languette d'étanchéité horizontale 320 logée dans une deuxième rainure horizontale 340 qui s'étend sur une partie de la longueur de la base annulaire 312,
- une languette d'étanchéité verticale amont 322 logée dans une rainure verticale amont 342 qui s'étend le long de la patte amont 314,
- une première languette d'étanchéité verticale aval 323 logée dans une première rainure verticale aval 343 qui s'étend le long de la patte aval 316, et
- une deuxième languette d'étanchéité verticale aval 326 logée dans une deuxième rainure verticale aval 346 qui s'étend le long de la patte aval 316 en amont de la première languette 323.

La deuxième rainure horizontale 340 débouche d'un côté dans la partie inférieure de la rainure verticale amont 342 et de l'autre côté dans la partie inférieure de la deuxième rainure verticale aval 346. Ainsi, la deuxième languette d'étanchéité horizontale 320 est en contact à une extrémité 320a avec la languette d'étanchéité verticale amont 322 et en contact à l'autre extrémité 320b avec la deuxième languette verticale aval 326. En outre, la première rainure verticale aval 343 débouche dans la première rainure horizontale 341 de sorte que l'extrémité inférieure 323b de la languette d'étanchéité verticale aval 323 est en regard de la première languette d'étanchéité horizontale 321.

Une languette 327 est en outre ajoutée entre les extrémités supérieures des languettes verticales 323 et 326 afin d'assurer une continuité dans l'étanchéité formée par ces deux languettes verticales. La languette 327 est logée dans une rainure horizontale 347 débouchant dans la partie supérieure des rainures verticales 343 et 346.

Un premier joint coudé 324 est logé à la fois dans la rainure verticale amont 342 et dans la deuxième rainure horizontale 340. Un deuxième joint coudé 325 est logé à la fois dans la première rainure horizontale 240 et dans la deuxième rainure verticale aval 346. Un troisième joint coudé 327 est logé à la fois dans la première rainure horizontale 341 et dans la première rainure verticale aval 343. Les joints coudés 324, 325 et 327 peuvent être formés à partir de feuilles de métal pliées. D'autres matériaux tels que ceux mentionnés ci-avant sont également envisageables.

Avec deux languettes d'étanchéité horizontales superposées dans la direction radiale D_{R}, on réalise une double étanchéité au niveau de la base de l'anneau qui renforce l'étanchéité inter-secteur dans l'anneau tout en assurant une redirection de l'air circulant du côté externe de l'anneau vers l'amont, c'est-à-dire dans la roue mobile formées par les pales rotatives à l'intérieur de l'anneau. Par ailleurs, l'utilisation des joints coudés 324, 325 et 327 permettent de boucher les fuites qui peuvent se produire au niveau des portions de contact entre les languettes d'étanchéité et de mettre ainsi en série les sections de fuites vers l'aval. Dans l'exemple décrit ici, le joint coudé 324 empêche les fuites au niveau de la portion de contact entre la première languette horizontale 320 et la languette verticale amont 322. Le joint coudé 325 empêche les fuites au niveau de la portion de contact entre la deuxième languette horizontale 320 et la deuxième languette verticale aval 346. Enfin, le joint coudé 327 empêche les fuites au niveau de la portion de contact entre la première languette horizontale 321 et la première languette verticale aval 343. Enfin, ajoutant une deuxième languette d'étanchéité verticale en aval, on améliore encore l'efficacité de l'étanchéité.

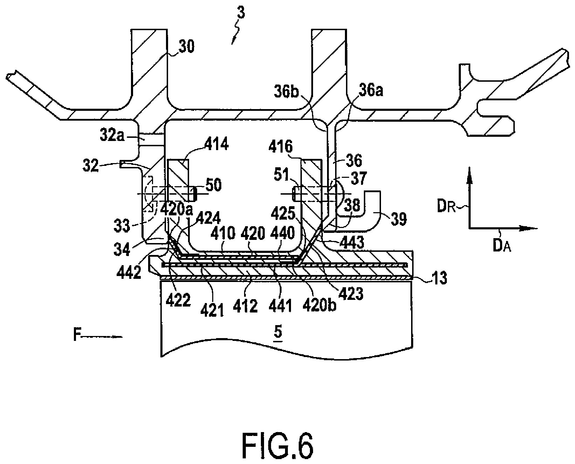

La figure 6 illustre un ensemble d'anneau de turbine haute pression selon un autre mode de réalisation de l'invention qui diffère de celui des figures 1, 2A et 2B en ce que les languettes verticales amont et aval s'étendent suivant une direction oblique dans les pattes amont et aval de chaque secteur d'anneau. Dans l'ensemble d'anneau de la figure 6, la structure métallique de support d'anneau est identique à la structure métallique de support d'anneau 3 décrite précédemment en relation avec les figures 1, 2A et 2B et ne sera pas décrite à nouveau par souci de simplification.

Plus précisément, comme représenté sur la figure 6, chaque secteur d'anneau 400 comprend :
- une première languette d'étanchéité horizontale 421 logée dans une première rainure horizontale 441 qui s'étend sur presque toute la longueur de la base annulaire 412,
- une deuxième languette d'étanchéité horizontale 420 logée dans une deuxième rainure horizontale 440 qui s'étend également sur une partie de la longueur de la base annulaire 412,
- une languette d'étanchéité verticale amont 422 logée dans une rainure verticale amont 442 qui s'étend le long de la patte amont 414, et
- une languette d'étanchéité verticale aval 423 logée dans une rainure verticale aval 443 qui s'étend le long de la patte aval 416.

La deuxième rainure horizontale 440 débouche d'un côté dans la partie inférieure de la rainure verticale amont 442 et de l'autre côté dans la partie inférieure de la rainure verticale aval 443. Ainsi, la deuxième languette d'étanchéité horizontale 420 est en contact à une extrémité 420a avec la languette d'étanchéité verticale amont 422 et en contact à l'autre extrémité 420b avec la languette verticale aval 423. En outre, la rainure verticale aval 443 débouche dans la première rainure horizontale 441 de sorte que l'extrémité inférieure 423b de la languette d'étanchéité verticale aval 423 est en contact avec de la première languette d'étanchéité horizontale 421.

Un premier élément d'étanchéité ou joint coudé 424 est logé à la fois dans la rainure verticale amont 442 et dans la deuxième rainure horizontale 440. Un deuxième élément d'étanchéité ou joint coudé 425 est logé à la fois dans la première rainure horizontale 441 et dans la rainure verticale aval 443. Les joints coudés 424 et 425 peuvent être formés à partir de feuilles de métal pliées. D'autres matériaux tels que ceux mentionnés ci-avant sont également envisageables. De manière optionnelle, un troisième élément d'étanchéité ou joint coudé (non représenté sur la figure 6) peut être logé à la fois dans la deuxième rainure horizontale 440 et dans la rainure verticale aval 443.

La rainure verticale amont 442 présente dans la patte amont 414 de chaque secteur d'anneau 400 s'étend dans une direction oblique par rapport à l'axe de la patte amont 414. La rainure verticale amont débouche sur la face externe 414a de la patte amont 414 au niveau de la lèvre 34 de la bride annulaire amont 32 de la structure métallique de support d'anneau 3. La rainure verticale aval 443 présente dans la patte aval 416 de chaque secteur d'anneau 400 s'étend dans une direction oblique par rapport à l'axe de la patte aval 416. La rainure verticale aval 443 débouche sur la face externe 416a de la patte aval 416 au niveau de la lèvre 38 de la bride annulaire aval 36 de la structure métallique de support d'anneau 3. Dans cette configuration, les rainures verticales amont et aval débouchent au niveau de l'appui avec les brides annulaires amont et aval de la structure métallique de support d'anneau. On diminue ainsi la distance entre l'extrémité supérieure des languettes verticales amont et aval et les portions d'appui des brides annulaires amont et aval de la structure métallique de support d'anneau.

Avec deux languettes d'étanchéité horizontales superposées dans la direction radiale D_{R}, on réalise une double étanchéité au niveau de la base de l'anneau qui renforce l'étanchéité inter-secteur dans l'anneau tout en assurant une redirection de l'air circulant du côté externe de l'anneau vers l'amont, c'est-à-dire dans la roue mobile formées par les pales rotatives à l'intérieur de l'anneau. Par ailleurs, l'utilisation des joints coudés 424 et 425 permettent de boucher les fuites qui peuvent se produire au niveau des portions de contact entre les languettes d'étanchéité et de mettre ainsi en série les sections de fuites vers l'aval. Dans l'exemple décrit ici, le joint coudé 424 empêche les fuites au niveau de la portion de contact entre la deuxième languette horizontale 420 et la languette verticale amont 422. Le joint coudé 425 empêche les fuites au niveau de la portion de contact entre la première languette horizontale 421 et la languette verticale aval 443. Enfin, avec des rainures verticales amont et aval s'étendant obliquement dans les pattes de chaque secteur d'anneau de manière à déboucher au niveau des portions d'appui avec les brides annulaires de la structure de support d'anneau, on réduit les fuites inter-secteurs au niveau de ces portions d'appui.

Les secteurs d'anneau décrits ci-avant sont en matériau composite à matrice céramique. Toutefois, la présente invention s'applique également à un ensemble d'anneau de turbine comprenant une pluralité de secteurs d'anneau en matériau métallique, les secteurs d'anneau présentant des géométries similaires à celles décrites précédemment.

## Revendications

1. Ensemble d'anneau de turbine comprenant une pluralité de secteurs d'anneau (10) formant un anneau de turbine (1) et une structure de support d'anneau (3) comprenant une bride annulaire amont (32) et une bride annulaire aval (36), chaque secteur d'anneau (10) ayant une première partie formant base annulaire (12) avec une face interne définissant la face interne de l'anneau de turbine (1) et une face externe à partir de laquelle s'étendent radialement une patte amont (14) et une patte aval (16), les pattes amont et aval (14, 16) de chaque secteur d'anneau (10) étant maintenues entre les deux brides annulaires amont et aval (32, 36) de la structure de support d'anneau (3), chaque secteur d'anneau (10) comprenant une première languette d'étanchéité horizontale (21) s'étendant le long de la base annulaire, la première languette d'étanchéité horizontale (21) étant logée dans une première rainure horizontale (41) présente dans la base annulaire (12), une languette d'étanchéité verticale amont (22) s'étendant le long de la patte amont (14), la languette d'étanchéité verticale amont (22) étant logée dans une rainure verticale (42) présente dans la patte amont (14) et une première languette d'étanchéité verticale aval (23) s'étendant le long de la patte aval (16), la première languette d'étanchéité verticale aval (23) étant logée dans une première rainure verticale (43) présente dans la patte aval (16),
**caractérisé en ce que** chaque secteur d'anneau (10) comprend en outre une deuxième languette d'étanchéité horizontale (20) s'étendant sur une partie de la base annulaire au-dessus de la première languette d'étanchéité horizontale (21) suivant la direction radiale de l'anneau, la deuxième languette d'étanchéité horizontale (20) étant logée dans une deuxième rainure horizontale (40) présente dans la base annulaire (12), **en ce qu'**un premier élément d'étanchéité coudé (24) est logé à la fois dans la rainure verticale (42) présente dans la patte amont (14) et dans la deuxième rainure horizontale (40) tandis qu'un deuxième élément d'étanchéité coudé (25) est logé à la fois dans la première rainure horizontale (41) et dans la première rainure verticale (43) présente dans la patte aval (16), la première rainure verticale (43) débouchant dans la première rainure horizontale (41), ou tandis qu'un deuxième élément d'étanchéité coudé est logé à la fois dans la deuxième rainure horizontale (40) et dans la première rainure verticale (43) présente dans la patte aval (16), la première rainure verticale (43) débouchant dans la deuxième rainure horizontale (40),
et **en ce que** l'ensemble d'anneau de turbine comprend en outre une pluralité de pions (50 ; 51) engagés à la fois dans au moins une des brides annulaires (32 ; 36) de la structure de support d'anneau (3) et les pattes (14 ; 16) des secteurs d'anneau (10) en regard de ladite au moins bride annulaire (32 ; 36).

2. Ensemble d'anneau de turbine selon la revendication 1, **caractérisé en ce que** chaque secteur d'anneau (100) comprend en outre une deuxième languette d'étanchéité verticale aval (126) s'étendant le long de la patte aval (116), la deuxième languette d'étanchéité verticale aval (126) étant logée dans une deuxième rainure verticale (146) présente dans la patte aval (16), la deuxième languette d'étanchéité verticale aval (126) étant en contact à l'une de ses extrémités avec la deuxième languette d'étanchéité horizontale (120), la deuxième rainure verticale (146) présente dans la patte aval (116) débouchant dans la deuxième rainure horizontale (140), le deuxième élément d'étanchéité coudé (125) étant logé à la fois dans la deuxième rainure horizontale (140) et dans la deuxième rainure verticale (146) présente dans la patte aval (116).

3. Ensemble d'anneau de turbine selon la revendication 2, **caractérisé en ce qu'**un troisième élément d'étanchéité coudé (327) est logé à la fois dans la première rainure horizontale (341) et dans la première rainure verticale (343) présente dans la patte aval (316).

4. Ensemble d'anneau de turbine selon la revendication 1, **caractérisé en ce que** chaque secteur d'anneau (210) comprend en outre une deuxième languette d'étanchéité verticale aval (226) s'étendant le long de la patte aval (216), la deuxième languette d'étanchéité verticale aval (226) étant logée dans une deuxième rainure verticale (246) présente dans la patte aval (216), la deuxième languette d'étanchéité verticale aval (226) étant en contact avec la deuxième languette d'étanchéité horizontale (220), la deuxième rainure verticale (246) présente dans la patte aval (216) débouchant dans les première et deuxième rainures horizontales (241, 240), le deuxième élément d'étanchéité coudé (225) étant logé à la fois dans la première rainure horizontale (241) et dans la première rainure verticale (243) présente dans la patte aval (216).

5. Ensemble d'anneau de turbine selon la revendication 1, **caractérisé en ce que** la bride annulaire amont (32) comporte une lèvre (34) en contact avec la patte amont de chaque secteur d'anneau (10) tandis que la bride annulaire aval (36) comporte une lèvre (38) en contact avec la patte aval de chaque secteur d'anneau (10),
et **en ce que** la rainure verticale (442) présente dans la patte amont (414) de chaque secteur d'anneau (410) s'étend dans une direction oblique par rapport à l'axe de la patte amont, ladite rainure verticale (442) débouchant sur la face externe de la patte amont (414) au niveau de la lèvre (34) de la bride annulaire amont (32) tandis que la rainure verticale (443) présente dans la patte aval (416) de chaque secteur d'anneau (410) s'étend dans une direction oblique par rapport à l'axe de la patte aval, ladite rainure verticale (443) débouchant sur la face externe de la patte aval (416) au niveau de la lèvre (38) de la bride annulaire aval (36).

6. Ensemble d'anneau de turbine selon la revendication 5, **caractérisé en ce que** le deuxième élément d'étanchéité coudé (425) est logé à la fois dans la première rainure horizontale (441) et dans la première rainure verticale (443) présente dans la patte aval (416).

7. Ensemble d'anneau de turbine selon l'une quelconque des revendications 1 à 6, caractérisé en ce **caractérisé en ce que** les deux brides annulaires (32, 36) de la structure de support d'anneau (3) exercent une contrainte sur les pattes (14, 16) des secteurs d'anneau (10) et **en ce qu'**au moins une (36) des brides de la structure de support d'anneau (3) est élastiquement déformable dans la direction axiale de l'anneau.

## Patentansprüche

1. Turbinenringanordnung, umfassend eine Vielzahl von Ringsektoren (10), die einen Turbinenring (1) bilden, sowie eine Ringtragstruktur (3) mit einem stromaufwärtigen ringförmigen Flansch (32) und einem stromabwärtigen ringförmigen Flansch (36), wobei jeder Ringsektor (10) einen eine ringförmige Basis bildenden ersten Teil (12) mit einer Innenseite, welche die Innenseite des Turbinenrings (1) definiert, und einer Außenseite, von der aus sich eine stromaufwärtige Lasche (14) und eine stromabwärtige Lasche (16) radial erstrecken, aufweist, wobei die stromaufwärtige und die stromabwärtige Lasche (14, 16) eines jeden Ringsektors (10) zwischen den beiden stromaufwärtigen und stromabwärtigen ringförmigen Flanschen (32, 36) der Ringtragstruktur (3) gehalten sind, wobei jeder Ringsektor (10) eine erste horizontale Dichtungszunge (21) umfasst, die sich entlang der ringförmigen Basis erstreckt, wobei die erste horizontale Dichtungszunge (21) in einer ersten horizontalen Nut (41), welche in der ringförmigen Basis (12) vorhanden ist, aufgenommen ist, wobei sich eine stromaufwärtige vertikale Dichtungszunge (22) entlang der stromaufwärtigen Lasche (14) erstreckt, wobei die stromaufwärtige vertikale Dichtungszunge (22) in einer vertikalen Nut (42), welche in der stromaufwärtigen Lasche (14) vorhanden ist, aufgenommen ist, und eine erste stromabwärtige vertikale Dichtungszunge (23) sich entlang der stromabwärtigen Lasche (16) erstreckt, wobei die erste stromabwärtige vertikale Dichtungszunge (23) in einer ersten vertikalen Nut (43), welche in der stromabwärtigen Lasche (16) vorhanden ist, aufgenommen ist,
**dadurch gekennzeichnet, dass** jeder Ringsektor (10) ferner eine zweite horizontale Dichtungszunge (20) umfasst, die sich über einen Teil der ringförmigen Basis oberhalb der ersten horizontalen Dichtungszunge (21) in der radialen Richtung des Rings erstreckt, wobei die zweite horizontale Dichtungszunge (20) in einer zweiten horizontalen Nut (40), welche in der ringförmigen Basis (12) vorhanden ist, aufgenommen ist, dass ein erstes abgewinkeltes Dichtungselement (24) sowohl in der vertikalen Nut (42), welche in der stromaufwärtigen Lasche (14) vorhanden ist, als auch in der zweiten horizontalen Nut (40) aufgenommen ist, während ein zweites abgewinkeltes Dichtungselement (25) sowohl in der erste horizontalen Nut (41) als auch in der ersten vertikalen Nut (43), welche in der stromabwärtigen Lasche (16) vorhanden ist, aufgenommen ist, wobei die erste vertikale Nut (43) in die erste horizontale Nut (41) mündet, oder während ein zweites abgewinkeltes Dichtungselement sowohl in der zweiten horizontalen Nut (40) als auch in der ersten vertikalen Nut (43), welche in der stromabwärtigen Lasche (16) vorhanden ist, aufgenommen ist, wobei die erste vertikale Nut (43) in die zweite horizontale Nut (40) mündet,
und dass die Turbinenringanordnung ferner eine Vielzahl von Stiften (50; 51) umfasst, die sowohl in wenigstens einen der ringförmigen Flansche (32; 36) der Ringtragstruktur (3) und die Laschen (14; 16) der Ringsektoren (10) gegenüber dem wenigstens einen ringförmigen Flansch (32; 36) eingreifen.

2. Turbinenringanordnung nach Anspruch 1, **dadurch gekennzeichnet, dass** jeder Ringsektor (100) ferner eine zweite stromabwärtige vertikale Dichtungszunge (126) umfasst, die sich entlang der stromabwärtigen Lasche (116) erstreckt, wobei die zweite stromabwärtige vertikale Dichtungszunge (126) in einer zweiten vertikalen Nut (146), welche in der stromabwärtigen Lasche (16) vorhanden ist, aufgenommen ist, wobei die zweite stromabwärtige vertikale Dichtungszunge (126) an einem ihrer Enden mit der zweiten horizontalen Dichtungszunge (120) in Kontakt steht, wobei die zweite vertikale Nut (146), welche in der stromabwärtigen Lasche (116) vorhanden ist, in die zweite horizontale Nut (140) mündet, wobei das zweite abgewinkelte Dichtungselement (125) sowohl in der zweiten horizontalen Nut (140) als auch in der zweiten vertikalen Nut (146), welche in der stromabwärtigen Lasche (116) vorhanden ist, aufgenommen ist.

3. Turbinenringanordnung nach Anspruch 2, **dadurch gekennzeichnet, dass** ein drittes abgewinkeltes Dichtungselement (327) sowohl in der ersten horizontalen Nut (341) als auch in der ersten vertikalen Nut (343), welche in der stromabwärtigen Lasche (316) vorhanden ist, aufgenommen ist.

4. Turbinenringanordnung nach Anspruch 1, **dadurch gekennzeichnet, dass** jeder Ringsektor (210) ferner eine zweite stromabwärtige vertikale Dichtungszunge (226) umfasst, die sich entlang der stromabwärtigen Lasche (216) erstreckt, wobei die zweite stromabwärtige vertikale Dichtungszunge (226) in einer zweiten vertikalen Nut (246), welche in der stromabwärtigen Lasche (216) vorhanden ist, aufgenommen ist, wobei die zweite stromabwärtige vertikale Dichtungszunge (226) mit der zweiten horizontalen Dichtungszunge (220) in Kontakt steht, wobei die zweite vertikale Nut (246), welche in der stromabwärtigen Lasche (216) vorhanden ist, in die erste und die zweite horizontale Nut (241, 240) mündet, wobei das zweite abgewinkelte Dichtungselement (225) sowohl in der ersten horizontalen Nut (241) als auch in der ersten vertikalen Nut (243), welche in der stromabwärtigen Lasche (216) vorhanden ist, aufgenommen ist.

5. Turbinenringanordnung nach Anspruch 1, **dadurch gekennzeichnet, dass** der stromaufwärtige ringförmige Flansch (32) eine Lippe (34) aufweist, die mit der stromaufwärtigen Lasche eines jeden Ringsektors (10) in Kontakt steht, während der stromabwärtige ringförmige Flansch (36) eine Lippe (38) umfasst, die mit der stromabwärtigen Lasche eines jeden Ringsektors (10) in Kontakt steht,
und dass die vertikale Nut (442), welche in der stromaufwärtigen Lasche (414) eines jeden Ringsektors (410) vorhanden ist, sich in einer schrägen Richtung gegenüber der Achse der stromaufwärtigen Lasche erstreckt, wobei die vertikale Nut (442) an der Außenseite der stromaufwärtigen Lasche (414) im Bereich der Lippe (34) des stromaufwärtigen ringförmigen Flansches (32) ausmündet, während die vertikale Nut (443), welche in der stromabwärtigen Lasche (416) eines jeden Ringsektors (410) vorhanden ist, sich in einer schrägen Richtung gegenüber der Achse der stromabwärtigen Lasche erstreckt, wobei die vertikale Nut (443) an der Außenseite der stromabwärtigen Lasche (416) im Bereich der Lippe (38) des stromabwärtigen ringförmigen Flansches (36) ausmündet.

6. Turbinenringanordnung nach Anspruch 5, **dadurch gekennzeichnet, dass** das zweite abgewinkelte Dichtungselement (425) sowohl in der ersten horizontalen Nut (441) als auch in der ersten vertikalen Nut (443), welche in der stromabwärtigen Lasche (416) vorhanden ist, aufgenommen ist.

7. Turbinenringanordnung nach einem der Ansprüche 1 bis 6, **dadurch gekennzeichnet, dass** die beiden ringförmigen Flansche (32, 36) der Ringtragstruktur (3) eine Spannung auf die Laschen (14, 16) der Ringsektoren (10) ausüben und dass wenigstens einer (36) der Flansche der Ringtragstruktur (3) in der axialen Richtung des Rings elastisch verformbar ist.

## Claims

1. A turbine ring assembly comprising both a plurality of ring sectors (10) together forming a turbine ring (1) and also a ring support structure (3) comprising an upstream annular flange (32) and a downstream annular flange (36), each ring sector (10) having a first portion forming an annular base (12) with an inner face defining the inside face of the turbine ring (1) and an outer face from which there extend radially an upstream tab (14) and a downstream tab (16), the upstream and downstream tabs (14, 16) of each ring sector (10) being held between the upstream and downstream annular flanges (32, 36) of the ring support structure (3), each ring sector (10) having a first horizontal sealing tongue (21) extending along the annular base, the first horizontal sealing tongue (21) being received in a first horizontal groove (41) present in the annular base (12), an upstream vertical sealing tongue (22) extending along the upstream tab (14), the upstream vertical sealing tongue (22) being received in a vertical groove (42) present in the upstream tab (14), and a first downstream vertical sealing tongue (23) extending along the downstream tab (16), the first downstream vertical sealing tongue (23) being received in a first vertical groove (43) present in the downstream tab (16);
the assembly being **characterized in that** each ring sector (10) further comprises a second horizontal sealing tongue (20) extending over a portion of the annular base over the first horizontal sealing tongue (21) in the radial direction of the ring, the second horizontal sealing tongue (20) being received in a second horizontal groove (40) present in the annular base (12);
**in that** a first angled sealing element (24) is received both in the vertical groove (42) present in the upstream tab (14) and in the second horizontal groove (40), while a second angled sealing element (25) is received both in the first horizontal groove (41) and in the first vertical groove (43) present in the downstream tab (16), the first vertical groove (43) opening out into the first horizontal groove (41), or while a second angled sealing element is received both in the second horizontal groove (40) and in the first vertical groove (43) present in the downstream tab (16), the first vertical groove (43) opening out into the second horizontal groove (40); and
**in that** the turbine ring assembly further comprises a plurality of pegs (50; 51) engaged both in at least one of the annular flanges (32; 36) of the ring support structure (3) and in the tabs (14; 16) of the ring sectors (10) facing said at least one annular flange (32; 36) .

2. A turbine ring assembly according to claim 1, **characterized in that** each ring sector (100) further comprises a second downstream vertical sealing tongue (126) extending along the downstream tab (116), the second downstream vertical sealing tongue (126) being received in a second vertical groove (146) present in the downstream tab (16), the second downstream vertical sealing tongue (126) being in contact at one of its ends with the second horizontal sealing tongue (120), the second vertical groove (146) present in the downstream tab (116) opening out into the second horizontal groove (140), the second angled sealing element (125) being received both in the second horizontal groove (140) and in the second vertical groove (146) present in the downstream tab (116).

3. A turbine ring assembly according to claim 2, **characterized in that** a third angled sealing element (327) is received both in the first horizontal groove (341) and in the first vertical groove (343) present in the downstream tab (316).

4. A turbine ring assembly according to claim 1, **characterized in that** each ring sector (210) further comprises a second downstream vertical sealing tongue (226) extending along the downstream tab (216), the second downstream vertical sealing tongue (226) being received in a second vertical groove (246) present in the downstream tab (216), the second downstream vertical sealing tongue (226) being in contact with the second horizontal sealing tongue (220), the second vertical groove (246) present in the downstream tab (216) opening out into the first and second horizontal grooves (241, 240), the second angled sealing element (225) being received both in the first horizontal groove (241) and in the first vertical groove (243) present in the downstream tab (216) .

5. A turbine ring assembly according to claim 1, **characterized in that** the upstream annular flange (32) includes a lip (34) in contact with the upstream tab of each ring sector (10), while the downstream annular flange (36) includes a lip (38) in contact with the downstream tab of each ring sector (10); and
**in that** the vertical groove (442) present in the upstream tab (414) of each ring sector (410) extends in a direction that is oblique relative to the axis of the upstream tab, said vertical groove (442) opening out into the outside face of the upstream tab (414) at the lip (34) of the upstream annular flange (32), while the vertical groove (443) present in the downstream tab (416) of each ring sector (410) extends in a direction that is oblique relative to the axis of the downstream tab, said vertical groove (443) opening out into the outside face of the downstream tab (416) at the lip (38) of the downstream annular flange (36).

6. A turbine ring assembly according to claim 5, **characterized in that** the second angled sealing element (425) is received both in the first horizontal groove (441) and in the first vertical groove (443) present in the downstream tab (416).

7. A turbine ring assembly according to any one of claims 1 to 6, **characterized in that** the two annular flanges (32, 36) of the ring support structure (3) exert stress on the tabs (14, 16) of the ring sectors (10), and **in that** at least one of the flanges (36) of the ring support structure (3) is elastically deformable in the axial direction of the ring.
